# EUROPEAN PATENT SPECIFICATION

(11) **EP 2 831 983 B1**
(45) Date of publication and mention of the grant of the patent: **05.02.2020**
(21) Application number: 13711905.3
(22) Date of filing: 25.03.2013
(51) Int. Cl.: H02K 15/00, H02K 3/50

(54) **ELECTRIC MACHINE AND ASSEMBLING METHOD**
ELEKTRISCHE MASCHINE UND MONTAGEVERFAHREN DAFÜR
MACHINE ÉLECTRIQUE ET PROCÉDÉ D'ASSEMBLAGE

(30) Priority: 30.03.2012 EP 12290112
(43) Date of publication of application: 04.02.2015
(73) Proprietor: General Electric Technology GmbH, 5400 Baden (CH)
(72) Inventor: CLEMENCE, Laurent, Didier, Jean, F-90400 Danjoutin (FR); BRAUN, Yves, F-68800 Roderen (FR)
(74) Representative: BRP Renaud & Partner mbB Rechtsanwälte Patentanwälte Steuerberater
(86) International application number: PCT/EP2013/056301
(87) International publication number: WO 2013/144093

(56) References cited:
- DE-B- 1 286 170
- US-A- 4 385 254
- US-A- 4 894 575

## Description

### TECHNICAL FIELD

The present disclosure relates to an electric machine and an assembling method.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of rotating electric machines.

In particular the disclosure refers to the stator windings and to the connection among them and to phase rings.

### BACKGROUND

Electric machines such as electric generators or electric motors have a stator and a rotor housed in a casing.

The stator has slots that house stator bars; the stator bars are connected each other at their ends to define stator windings (usually three phase windings). The stator windings are also connected to phase rings that are in turn connected to bushings that penetrate the casing to transfer electric power through the casing.

The connection among stator bars and between stator bars and phase rings is usually made by brazing.

This connection proved to be efficient, but it can anyhow cause some problems, for example during maintenance operations.

During maintenance operation in some cases some or all the stator bars that constitute the windings are removed or the phase rings are removed. This requires that some or all the connections among the stator bars and/or between the stator bars and phase rings are removed.

After the maintenance operations, the stator bars are usually replaced with new bars or in some cases the old bars can be reconnected together and/or to the phase rings.

Usually this is done by brazing on the yard (i.e. on the field).

Brazing on the yard could be a troubling operation, because it requires a brazing equipment and supplies of energy and high pressure water that could not be available.

In addition, the brazing equipment can undergo a failure; in this case the brazing operation must be stopped until the brazing equipment is repaired or replaced.

For these reasons brazing on the yard is often a time consuming and expensive operation.

Alternative solutions include screwed connections. These kinds of connection are anyhow very costly, because the bars must be prepared for example by silvering the parts to be connected and strict tolerances are required.

Document US 4 894 575 A relates to an electric machine and an assembling method according to the preamble of independent claim 1 and claim 5.

Document DE 12 86 170 B relates to an arrangement for combining electrical contact rails.

Document US 4 385 254 A relates generally to electric machines, and is particularly concerned with bar windings of the stator of an electric machine. More particularly, this document relates to the construction of an arrangement for the electric insulation of the end connections of extreme bars in the electric-machine stator winding, that belong to different phase bar groups of said winding.

### SUMMARY

An aspect of the disclosure is thus that of providing an electric machine according to claim 1 and a method according to claim 5 by which the connection of the stator bars together and/or to the phase ring is more time and cost efficient than brazing.

Another aspect of the disclosure is to provide an electric machine and a method by which the connection of the stator bars together and/or to the phase ring has less constrains than those provided by brazing.

A further aspect of the disclosure is to provide an electric machine and a method that are less expensive than existing machines and methods, in particular when compared to those with screwed connections between end windings together and/or with phase ring.

These and further aspects are attained by providing an electric machine and a method in accordance with the accompanying claims.

### BRIEF DESCRIPTION OF THE DRAWINGS

Further characteristics and advantages will be more apparent from the description of a preferred but non-exclusive embodiment of the electric machine and method illustrated by way of non-limiting example in the accompanying drawings, in which:

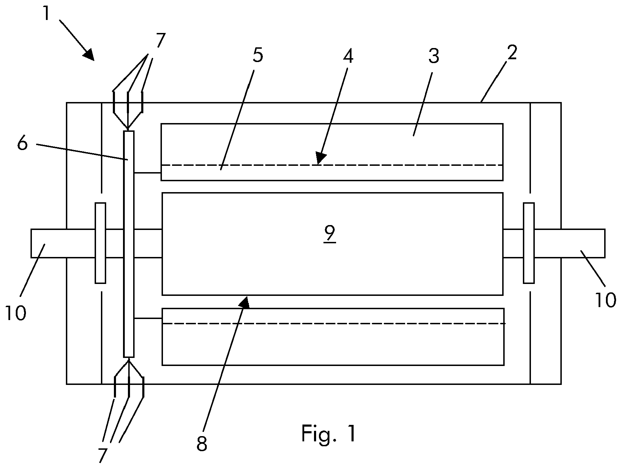

Figure 1 is a schematic view of an electric machine;
Figure 2 shows a particular of an electric machine,
Figure 3 is a view according to arrow V of figure 2,
Figures 4 and 5 show an embodiment of a connecting element;
Figure 6 shows a different embodiment of a connecting element; and
Figure 7 shows a particular of a connecting element connected to stator bars or stator bars and phase rings.

### DETAILED DESCRIPTION OF EXEMPLARY EMBODIMENTS

With reference to the attached figures, a rotating electric machine 1, such as a synchronous or asynchronous electric generator or a synchronous or asynchronous electric motor, comprises a casing 2 that houses a stator 3 including stator windings 4 that comprise stator bars 5 connected each other.

The casing 2 also houses phase rings 6 connected to the stator windings 4 and to bushings 7 that allow electric power transmission through the casing 2.

The casing 2 also houses a rotor 8 having a rotor core 9 and shafts 10 at the ends thereof.

The reciprocally connected parts of the stator bars 5 and/or stator bars 5 and phase rings 6 can be connected through plates 30 and tightening elements 16; other connections are anyhow possible.

The tightening elements 16 can be provided to fix the reciprocally connected parts of the stator bars 5 and/or stator bars 5 and phase rings 6. For example, the tightening elements are bolts.

In addition, connecting elements 12 between the parts connected together are provided.

The connecting elements 12 can include a frame 13 and one or more conductive elements 14 protruding from opposite faces 15a, 15b of the frame 13. The frame 13 protects the conductive element 14 against pollution, resin and putty.

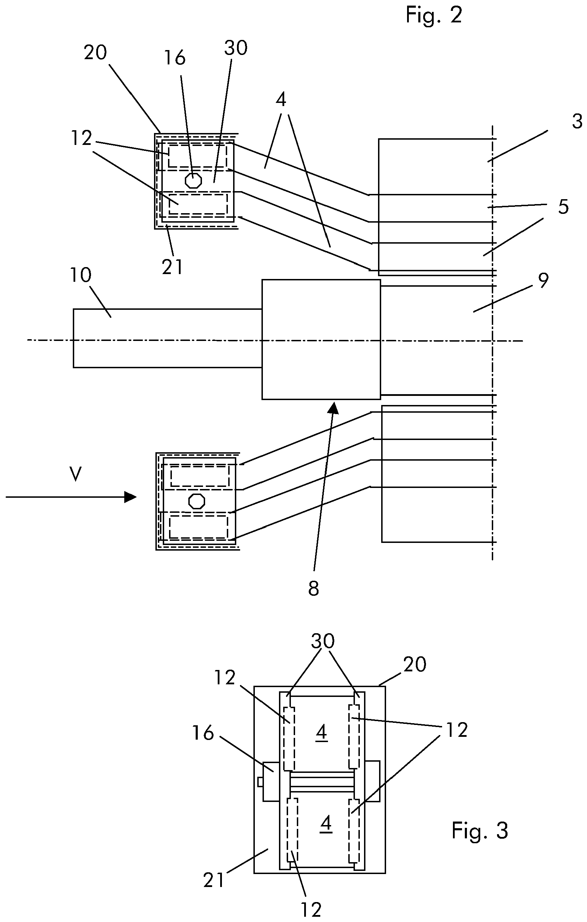

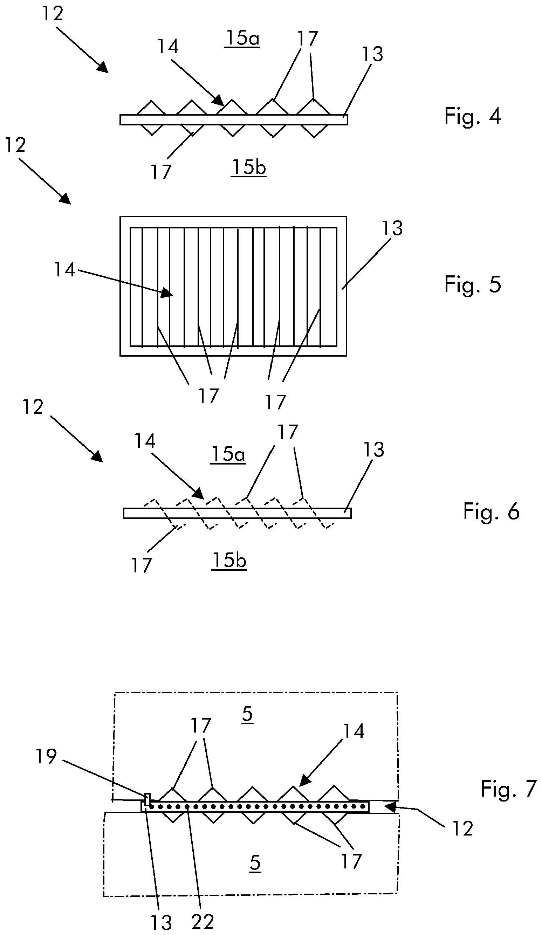

The conductive element 14 can have different structure and shape; for example it can include a single element (figures 3 and 4), or it can include a plurality of elements such as plates one beside the other (figure 5) or any other configuration.

The conductive elements 14 have portions 17 arranged to penetrate and penetrating the parts of the stator bars 5 and/or stator bars 5 and phase rings 6.

The penetrating portions 17 of the conductive elements 14 preferably have a sharp configuration and are harder than the material of the parts of the stator bars 5 and/or the stator bars 5 and phase rings 6. This helps penetration and thus electric contact. For example the material of the penetrating portions 17 can be a copper alloy.

The frame 13 is preferably made out of a plastic material. The plastic material is pressed during assembly and creates a seal that protects the conductive elements 14.

Fixing elements 19 to connect the frame 13 to the parts of the stator bars 5 and/or the stator bars 5 and phase rings 6 can also be provided.

The fixing element 19 can include pins and/or screws. Likewise, the stator bars 5 and/or phase rings 6 can be provided with holes or seats to house a part of the pins and/or screws.

The connected parts (in particular for the stator bars 5) can be protected by covering them with caps 20, and a putty (preferably an electrically insulating putty) can be provided within the caps 20.

In addition, putty 22 (preferably an electrically conductive putty) can be provided within the frame 13 (when the frame is provided) and/or around the conductive elements 14, to improve electric contact and reduce electric resistance between the reciprocally connected parts of the stator bars 5 and/or stator bars 5 and phase rings 6. This feature is anyhow not mandatory.

The operation of the electric machine is apparent from that described and illustrated and is substantially the following.

During maintenance operation the stator bars 5 and/or phase rings or parts thereof are disconnected from one another to replace them and/or to carry out maintenance operations.

When the stator bars 5 and/or phase rings 6 must be connected again (the same or different stator bars can be connected), the connecting elements 12 are first connected to a first stator bar 5 or phase ring 6 via the fixing elements 19 (when provided), then a second stator bar 5 or phase ring 6 is provided beside the first, such that the connecting element 12 rests in-between.

Since the connecting elements 12 guarantee a low electric resistance between the reciprocally connected parts, no high pressure or surface preparation is needed for the parts to be connected together.

When the electric machine 1 is an electric generator (the operation for an electric motor or other kind of electric machine is similar) the rotor 8 rotates and induces electric power into the stator bars 5.

The electric power flows through the stator bars 5 and is supplied to the phase rings 6.

The connection through the connecting elements 12 allows a good electric contact and a low electric resistance. This helps efficiency, because the whole electric power generated has to pass through the stator bars 5 and phase rings 6.

The disclosure also refers to a method for assembling an electric machine.

The method comprises providing the connecting elements 12 between the reciprocally connected parts of the stator bars 5 and/or the stator bars 5 and phase rings 6.

In addition, the plates 30 and tightening elements 16 can also be provided to fix the reciprocally connected parts of the stator bars 5 and/or stator bars 5 and phase rings 6; it is clear that the plates 30 could not be provided; in addition also the plates 30 and/or tightening elements 16 could not be provided according to the particular machine configuration.

Electrically conductive putty 22 can be provided inside the frame 13.

The method can be carried out on the yard during a maintenance outage of the electric machine.

In this case the stator bars 5 and/or phase rings 6 are disconnected first and are then replaced or reconnected on the yard. This is advantageous because the connecting elements 12 allow a very good electric connection without the need of:
- brazing
- preparation of the surfaces to be connected (for example by silvering)
- high contact pressure between the connected parts (i.e. the tightening elements 16 keep the parts together, but they are not requested to apply high pressure between them, i.e. only a limited pressure is needed).

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: stator winding
- 5: stator bar
- 6: phase ring
- 7: bushing
- 8: rotor
- 9: rotor core
- 10: rotor shaft
- 12: connecting element
- 13: frame
- 14: conductive element
- 15a, 15b: face
- 16: tightening element
- 17: penetrating portion
- 19: fixing element
- 20: cap
- 21: putty
- 22: putty
- 30: plate
- V: view

## Claims

1. An electric machine (1) comprising:
a stator (3) including stator windings (4),
the stator windings (4) comprising stator bars (5) connected each other,
phase rings (6) connected to the stator windings (4), a rotor (8),
whereas the reciprocally connected parts of
the stator bars (5) are connected through a connecting element (12), which allows an electric contact, wherein the connecting element (12) comprises a frame (13) and protruding from opposite faces (15a, 15b) of the frame (13) penetrating portions (17) penetrating parts of the stator bars (5) and/or stator bars (5) and phase rings (6), and
the electric machine (1) comprises at least a fixing element (19) to connect the frame (13) to a part of a stator bar (5) and/or to the stator bars (5) and the phase rings (6),
**characterised in that** the material of at least the penetrating portions (17) of the at least a conductive element (14) is harder than the material of the parts of the stator bars (5).

2. The electric machine (1) of claim 1, **characterised in that** the penetrating portions (17) of the at least a conductive element (14) have a sharp configuration.

3. The electric machine (1) of claim 1, **characterised in that** plates (30) are provided to fix the reciprocally connected parts of the stator bars (5).

4. The electric machine (1) of claim 1, **characterised in that** the fixing element (19) includes a pin and/or a screw.

5. Method for assembling an electric machine comprising:
a stator (3) including stator windings (4),
the stator windings (4) comprising stator bars (5) connected to each other,
phase rings (6) connected to the stator windings (4), a rotor (8),
whereas the method providing a connecting element (12) comprising penetrating portions (17), which allows an electric contact, the method further comprising providing the connecting element (12) with a frame (13), providing penetrating portions (17) protruding from opposite faces (15a, 15b) of the frame (13), penetrating the parts of the stator bars (5) an/or stator bars (5) and phase rings (6) by the penetrating portions (17), connecting the frame (13) to a part of a stator bar (5) and/or to the stator bars (5) and the phase rings (6) by at least a fixing element (19) comprised by the electric machine (1),
**characterised in that** the material of at least the penetrating portions (17) of the at least a conductive element (14) is harder than the material of the parts of the stator bars (5).

6. The method of claim 5, **characterised by** providing plates (30) to fix the reciprocally connected parts of the stator bars (5).

7. The method of claim 5, **characterised by** being carried out on the yard during a maintenance outage of the electric machine (1).

8. The method of claim 5, **characterised by** providing an electrically conductive putty (22) inside the frame (13) of the connecting element (12).

## Patentansprüche

1. Elektrische Maschine (1), umfassend:
einen Stator (3) einschließlich Statorwicklungen (4), wobei die Statorwicklungen (4) miteinander verbundene Statorstangen (5) umfassen,
Phasenringe (6), die mit den Statorwicklungen (4) verbunden sind,
einen Rotor (8),
wobei die wechselseitig verbundenen Teile der Statorstangen (5) durch ein Verbindungselement (12) verbunden sind, das einen elektrischen Kontakt ermöglicht, wobei das Verbindungselement (12) einen Rahmen (13) umfasst und von gegenüberliegenden Flächen (15a, 15b) des Rahmens (13), die Abschnitte (17) durchdringen, Teile der Statorstangen (5) und/oder Statorstangen (5) und Phasenringe (6) durchdringen, und die elektrische Maschine (1) mindestens ein Befestigungselement (19) umfasst, um den Rahmen (13) mit einem Teil einer Statorstange (5) und/oder mit den Statorstangen (5) und den Phasenringen (6) zu verbinden,
**dadurch gekennzeichnet, dass** das Material von mindestens den Durchdringungsabschnitten (17) des mindestens einen leitenden Elements (14) härter als das Material der Teile der Statorstangen (5) ist.

2. Elektrische Maschine (1) nach Anspruch 1, **dadurch gekennzeichnet, dass** die Durchdringungsabschnitte (17) des mindestens einen leitenden Elements (14) scharf ausgebildet sind.

3. Elektrische Maschine (1) nach Anspruch 1, **dadurch gekennzeichnet, dass** Platten (30) bereitgestellt sind, um die wechselseitig verbundenen Teile der Statorstangen (5) zu befestigen.

4. Elektrische Maschine (1) nach Anspruch 1, **dadurch gekennzeichnet, dass** das Befestigungselement (19) einen Stift und/oder eine Schraube einschließt.

5. Verfahren zur Montage einer elektrischen Maschine, umfassend:
einen Stator (3) einschließlich Statorwicklungen (4), wobei die Statorwicklungen (4) miteinander verbundene Statorstangen (5) umfassen,
Phasenringe (6), die mit den Statorwicklungen (4) verbunden sind,
einen Rotor (8),
wobei das Verfahren ein Verbindungselement (12) bereitstellt, das Durchdringungsabschnitte (17) umfasst, die einen elektrischen Kontakt ermöglichen, wobei das Verfahren ferner das Bereitstellen des Verbindungselements (12) mit einem Rahmen (13), das Bereitstellen von Durchdringungsabschnitten (17), die von gegenüberliegenden Flächen (15a, 15b) des Rahmens (13) vorstehen, welche die Teile der Statorstangen (5) und/oder Statorstangen (5) und Phasenringe (6) durch die Durchdringungsabschnitte (17) durchdringen und den Rahmen (13) mit einem Teil einer Statorstange (5) und/oder mit den Statorstangen (5) und den Phasenringen (6) durch mindestens ein Befestigungselement (19), das von der elektrischen Maschine (1) umfasst wird, verbinden, umfasst, **dadurch gekennzeichnet, dass** das Material von mindestens den Durchdringungsabschnitten (17) des mindestens einen leitenden Elements (14) härter als das Material der Teile der Statorstangen (5) ist.

6. Verfahren nach Anspruch 5, **gekennzeichnet durch** das Bereitstellen von Platten (30) zum Befestigen der wechselseitig verbundenen Teile der Statorstangen (5).

7. Verfahren nach Anspruch 5, **gekennzeichnet dadurch,** während eines Wartungsausfalls der elektrischen Maschine (1) auf dem Gelände durchgeführt wird.

8. Verfahren von Anspruch 5, **gekennzeichnet durch** das Bereitstellen einer elektrisch leitenden Spachtelmasse (22) innerhalb des Rahmens (13) des Verbindungselements (12).

## Revendications

1. Machine électrique (1) comprenant :
un stator (3) incluant des enroulements de stator (4), les enroulements de stator (4) comprenant des barres de stator (5) reliées les unes aux autres,
des anneaux de phase (6) reliés aux enroulements de stator (4),
un rotor (8),
tandis que les parties reliées réciproquement des barres de stator (5) sont reliées par l'intermédiaire d'un élément de liaison (12), qui permet un contact électrique, dans laquelle l'élément de liaison (12) comprend un cadre (13) et faisant saillie depuis des faces opposées (15a, 15b) du cadre (13) des parties pénétrantes (17) pénétrant des parties des barres de stator (5) et/ou des barres de stator (5) et des anneaux de phase (6), et la machine électrique (1) comprend au moins un élément de fixation (19) pour relier le cadre (13) à une partie d'une barre de stator (5) et/ou aux barres de stator (5) et aux anneaux de phase (6),
**caractérisée en ce que** le matériau d'au moins les parties pénétrantes (17) de l'au moins un élément conducteur (14) est plus dur que le matériau des parties des barres de stator (5).

2. Machine électrique (1) selon la revendication 1, **caractérisée en ce que** les parties pénétrantes (17) de l'au moins un élément conducteur (14) ont une configuration nette.

3. Machine électrique (1) selon la revendication 1, **caractérisée en ce que** des plaques (30) sont fournies pour fixer les parties reliées réciproquement des barres de stator (5)

4. Machine électrique (1) selon la revendication 1, **caractérisée en ce que** l'élément de fixation (19) inclut une goupille et/ou une vis.

5. Procédé d'assemblage d'une machine électrique comprenant :
un stator (3) incluant des enroulements de stator (4), les enroulements de stator (4) comprenant des barres de stator (5) reliées les unes aux autres,
des anneaux de phase (6) reliés aux enroulements de stator (4),
un rotor (8),
tandis que le procédé fournissant un élément de liaison (12) comprenant des parties pénétrantes (17), qui permet un contact électrique, le procédé comprenant en outre la fourniture de l'élément de liaison (12) avec un cadre (13), la fourniture de parties pénétrantes (17) faisant saillie depuis des faces opposées (15a, 15b) du cadre (13), la pénétration des parties des barres de stator (5) et/ou des barres de stator (5) et des anneaux de phase (6) par les parties pénétrantes (17), la liaison du cadre (13) à une partie d'une barre de stator (5) et/ou aux barres de stator (5) et aux anneaux de phase (6) par au moins un élément de fixation (19) compris par la machine électrique (1), **caractérisé en ce que** le matériau d'au moins les parties pénétrantes (17) de l'au moins un élément conducteur (14) est plus dur que le matériau des parties des barres de stator (5).

6. Procédé selon la revendication 5, **caractérisé par** la fourniture de plaques (30) pour fixer les parties reliées réciproquement des barres de stator (5).

7. Procédé selon la revendication 5, **caractérisé en ce qu'**il est mis en œuvre sur le terrain pendant une coupure de maintenance de la machine électrique (1).

8. Procédé selon la revendication 5, **caractérisé par** la fourniture d'un mastic électroconducteur (22) à l'intérieur du cadre (13) de l'élément de liaison (12).
